# EUROPEAN PATENT APPLICATION

(11) **EP 4 645 950 A1**
(43) Date of publication of application: **05.11.2025**
(21) Application number: 22969711.5
(22) Date of filing: 29.12.2022
(51) Int. Cl.: H04W 28/24

(54) **QUALITY OF SERVICE ALLOCATION METHOD AND APPARATUS**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2022/143600
(87) International publication number: WO 2024/138564

(57) **Abstract**

Disclosed in the embodiments of the present disclosure are a quality of service allocation method and apparatus. The method comprises: according to end-to-end quality of service (QoS) requirements of a sidelink data radio bearer (SL-DRB), performing QoS allocation on a first PC5 link and a second PC5 link, wherein the first PC5 link is a PC5 unicast link between a first user equipment and a second user equipment, and the second PC5 link is a PC5 unicast link between the second user equipment and a third user equipment; and the first user equipment establishing an end-to-end connection with the third user equipment by means of the second user equipment. By means of implementing the embodiments of the present disclosure, it is possible to solve the problem of how to perform QoS allocation on two PC5 links in a U2U scenario so as to ensure end-to-end QoS requirements, thereby ensuring QoS requirements of a data stream.

## Description

### TECHNICAL FIELD

The disclosure relates to the field of wireless communication technology, in particular to a Quality of Service (QoS) allocation method and a communication apparatus.

### BACKGROUND

**In** order to support user equipments (UEs) to communicate with each other directly, direct communication (also called sidelink (SL) communication) is introduced, and the interface between the UEs is referred to as PC5. A UE may can realize communication with a base station through a relay of another UE instead of directly connecting to the base station, in which the UE that is not connected to the base station is called a remote UE, and the UE that provides relay function is called relay UE, and the remote UE communicates with the relay UE through a sidelink. This architecture is called UE to Network (U2N) relay. In another scenario, instead of connecting directly to UE B, UE A can connect to the UE B through UE C as a relay. In this scenario, UE A and UE B are remote UEs, and UE C is a relay UE that provides relay function. All the UEs communicate with each other through SL unicast communication, and this architecture is called UE to UE (U2U) relay. When UE A directly maintains a unicast connection with UE B, it is called a SL direct link, and when UE A maintains a unicast connection with UE B through a relay UE, it is called a SL indirect link.

**In** a U2U scenario, a source remote UE communicates with a target remote UE through a relay UE, and the end-to-end quality of service (QoS) requirement of the radio bearer between the source remote UE and the target remote UE need to be guaranteed on two PC5 links. However, how to perform QoS allocation on two PC5 links to guarantee the end-to-end QoS requirement in the U2U scenario is an urgent problem to be solved.

### SUMMARY

The embodiments of the disclosure provide a QoS allocation method and a communication apparatus, which are suitable for a U2U scenario and can be applied to the Internet of Vehicles (IoV), such as vehicle to everything (V2X) communication, long term evolution-vehicle (LTE-V) communication and vehicle to vehicle (V2V) communication, or can be used in a field of smart driving or intelligent connected vehicle, which can solve the problem of how to perform QoS allocation on two PC5 links under a U2U scenario to meet an end-to-end QoS requirement, thereby meeting a QoS requirement of a radio bearer.

According to a first aspect of embodiments of the disclosure, a QoS allocation method is provided. The method includes:

performing QoS allocation on a first PC5 link and a second PC5 link according to an end-to-end QoS requirement of a SL Data Radio Bearer (SL-DRB);

in which the first PC5 link is a PC5 unicast link between a first UE and a second UE, the second PC5 link is a PC5 unicast link between the second UE and a third UE, and an end-to-end connection between the first UE and the third UE is established through the second UE.

**In** the technical solution, the problem of how to perform QoS allocation on two PC5 links to guarantee end-to-end QoS requirement in U2U scenario can be solved, thereby meeting a QoS requirement of a radio bearer.

**In** an implementation, performing QoS allocation on the first PC5 link and the second PC5 link according to the end-to-end QoS requirement of the SL-DRB, includes: determining an end-to-end packet delay budget (PDB) requirement of the SL-DRB according to the end-to-end QoS requirement of the SL-DRB; and performing PDB allocation on the first PC5 link and the second PC5 link according to the end-to-end PDB requirement of the SL-DRB, in which a sum of a PDB allocated to the first PC5 link and a PDB allocated to the second PC5 link is less than or equal to the end-to-end PDB requirement of the SL-DRB.

**In** an implementation, performing QoS allocation on the first PC5 link and the second PC5 link according to the end-to-end QoS requirement of the SL-DRB, includes: generating first configuration information of the SL-DRB on the first PC5 link and second configuration information of the SL-DRB on the second PC5 link according to the end-to-end QoS requirement of the SL-DRB; in which the first configuration information and the second configuration information both include at least one of: Sideline Relay Adaptation Protocol (SRAP) configuration information, Radio Link Control (RLC) configuration information, Medium Access Control (MAC) configuration information or Physical (PHY) layer configuration information.

**In** a possible implementation, the method is performed by the first UE. The method further includes: sending the first configuration information to the second UE; and sending the second configuration information to the third UE through the second UE.

**In** a possible implementation, the method further includes: obtaining SL Service Data Adaptation Protocol (SL-SDAP) configuration information and SL Packet Data Convergence Protocol (SL-PDCP) configuration information associated with the SL-DRB; and sending the SL-SDAP configuration information and the SL-PDCP configuration information to the third UE through the second UE.

**In** a possible implementation, obtaining the SL-SDAP configuration information and the SL-PDCP configuration information associated with the SL-DRB, includes: obtaining the SL-SDAP configuration information and the SL-PDCP configuration information associated with the SL-DRB from a network device; or obtaining the SL-SDAP configuration information and the SL-PDCP configuration information associated with the SL-DRB through pre-configuration.

**In** an implementation, the method is performed by a first network device, the first network device is a service network device of the first UE. The method further includes: sending the first configuration information and the second configuration information to the first UE, in which the first configuration information is sent by the first UE to the second UE, and the second configuration information is sent by the first UE to the third UE through the second UE.

**In** an implementation, the method is performed by the second UE, and the method further includes: sending the first configuration information to the first UE; and sending the second configuration information to the third UE.

**In** an implementation, the method is performed by a second network device, the second network device is a service network device of the second UE. The method further includes: sending the first configuration information and the second configuration information to the second UE, in which the first configuration information is sent by the second UE to the first UE, and the second configuration information is sent by the second UE to the third UE.

According to a second aspect of embodiments of the disclosure, a communication apparatus is provided. The communication apparatus has an ability to implement part or all of the functions of the UE or the network device in the method described in the first aspect. For example, the communication apparatus may have functions of some or all of embodiments of the disclosure, or may have a function of independently implementing any embodiment of the disclosure. The functions can be implemented by hardware or by executing corresponding software using hardware. The hardware or software includes one or more units or modules corresponding to the above functions.

In an implementation, the communication apparatus includes: a transceiver module and a processing module. The processing module is configured to support the communication apparatus to perform corresponding functions in the above method. The transceiver module is configured to support communication between the communication apparatus and other devices. The communication apparatus may further include a storage module coupled to the transceiver module and the processing module, which is configured to store necessary computer programs and data for the communication apparatus.

As an example, the processing module may be a processor, the transceiver module may be a transceiver or a communication interface, and the storage module may be a memory.

According to a third aspect of embodiments of the disclosure, a communication device is provided. The communication device includes: a processor. When the processor calls a computer program stored in a memory, the method described in the first aspect above is implemented.

According to a fourth aspect of embodiments of the disclosure, a communication device is provided. The communication device includes: a processor and a memory having a computer program stored thereon. When the processor executes the computer program stored in the memory, the communication device is caused to implement the method described in the first aspect above.

According to a fifth aspect of embodiments of the disclosure, a communication device is provided. The communication device includes: a processor and an interface circuit. The interface circuit is configured to receive code instructions and transmit the code instructions to the processor, and the processor is configured to run the code instructions to cause the device to perform the method described in the first aspect.

According to a sixth aspect of embodiments of the disclosure, a computer readable storage medium is provided. The computer readable storage medium is configured to store instructions used by the above communication apparatus. When the instructions are executed, the communication apparatus is caused to implement the method of the first aspect.

According to a seventh aspect of the disclosure, a computer program product including a computer program is provided. When the computer program is running on a computer, the computer is caused to implement the method of the first aspect.

According to an eighth aspect of the disclosure, a computer program is provided. When the computer program is running on a computer, the computer is caused to implement the method of the first aspect.

### BRIEF DESCRIPTION OF THE DRAWINGS

**In** order to clearly illustrate technical solutions of the embodiments of the disclosure or background technologies, the descriptions of drawings used in the embodiments of the disclosure or the background technologies are given below.
FIG. 1 is a schematic diagram of a communication system provided by an embodiment of the disclosure.
FIG. 2 is a flowchart of a QoS allocation method provided by an embodiment of the disclosure.
FIG. 3 is a flowchart of another QoS allocation method provided by an embodiment of the disclosure.
FIG. 4 is a flowchart of another QoS allocation method provided by an embodiment of the disclosure.
FIG. 5 is a flowchart of another QoS allocation method provided by an embodiment of the disclosure.
FIG. 6 is a structural schematic diagram of a communication apparatus provided by an embodiment of the disclosure.
FIG. 7 is a structural schematic diagram of a communication device provided by an embodiment of the disclosure.

### DETAILED DESCRIPTION

Embodiments of the disclosure will be described in detail, examples of which are illustrated in the accompanying drawings, in which the same or similar reference numerals indicate the same or similar elements or elements having the same or similar functions throughout. The embodiments described below with reference to the accompanying drawings are exemplary and are intended to explain the disclosure, but not to be construed as limiting the disclosure. In the description of the disclosure, unless otherwise specified, "/" means "or". For example, "A/B" means A or B. The term "and/or" in the disclosure only describes possible relationships between associated objects, which indicates three kinds of relationships. For example, "A and/or B" means that A exists alone, A and B both exist, and B exists alone.

The terms used in the embodiments of the disclosure are only for the purpose of describing specific embodiments, and are not intended to limit the embodiments of the disclosure. The singular forms of "a" and "the" used in the embodiments and the attached claims of the disclosure are also intended to include plural forms, unless the context clearly indicates other meanings.

It is understandable that although the terms "first", "second" and "third" are used in the embodiments of the disclosure to describe various types of information, the information should not be limited by these terms. These terms are only used to distinguish the same type of information from each other. For example, without departing from the scope of the embodiments of the disclosure, the first information may also be referred to as the second information, and similarly, the second information may also be referred to as the first information. Depending on the context, the term "if" and "in case of" as used herein may be interpreted as "when", "upon" or "in response to determining".

Embodiments of the disclosure are described in detail below, examples of which are illustrated in the accompanying drawings, in which the same or similar reference numerals refer to the same or similar elements throughout. The embodiments described below with reference to the accompanying drawings are exemplary and are intended to be used to explain the disclosure, but should not be construed as limiting the disclosure.

It should be noted that in order to support UEs to communicate with each other directly, direct communication (also called SL communication) is introduced, and the interface between the UEs is PC5. According to a correspondence between transmitting and a receiving UE, three SL transmission modes are supported on Sidelink, such as unicast, multicast and broadcast. The transmitting UE sends SL Control Information (SCI) on a Physical SL Control Channel (PSCCH), and sends second-stage SCI on a Physical SL Shared Channel (PSSCH), which carries a transmission data resource location, a source ID and a target ID. For Hybrid Automatic Repeat reQuest (HARQ) feedback-enabled packets, the receiving UE performs HARQ-Acknowledgement (ACK) (HARQ-ACK) feedback to the PSSCH on a Physical SL Feedback Channel (PSFCH).

There are two modes of allocating transmission resources for SL communication, one by dynamic scheduling by the network (i.e., resource allocation mode 1), and the other by autonomous selection in a resource pool by the UE (i.e., resource allocation mode 2) is. The dynamic scheduling is that the network dynamically allocates SL transmission resources to the UE based on cache data reported by the UE, or the network device semi-statically configures SL transmission resources to the UE. The autonomous selection is the UE's own random selection of transmission resources from a resource pool broadcast by the network or from a pre-configured resource pool. The network device can configure a plurality of resource pools for the UE on one Band Width Part (BWP). Which allocation mode to be used is configured by the network device through a Radio Resource Control (RRC) signaling.

A UE may can realize communication with a base station through a relay of another UE instead of directly connecting to the base station, in which the UE that is not connect to the base station is called remote UE, and the UE that provides relay function is called relay UE, and the remote UE communicates with the relay UE through sidelink. This architecture is called UE to Network (U2N) relay. In another scenario, instead of connecting directly to UE B, UE A can connect to the UE B through UE C as a relay. In this scenario, UE A and UE B are remote UEs, and UE C is a relay UE that provides relay function. All the UEs communicate with each other through SL unicast communication, and this architecture is called UE to UE (U2U) relay. When UE A directly maintains a unicast connection with UE B, it is called a SL direct link, and when UE A maintains a unicast connection with UE B through a relay UE, it is called a SL indirect link.

In the U2N scenario, the remote UE performs uplink and downlink data transmission with the base station through the relay UE. From the perspective of a network, the network can obtain a Uu link status between the network and the relay UE and a PC5 link status between the relay UE and the remote UE. The Uu link status between the network and the relay UE is obtained from a Uu (NR) measurement report of the relay UE, and the PC5 link status between the relay UE and the remote UE is obtained from a measurement report of the remote UE. In addition, in the U2N scenario, the resources of the Uu link and the PC5 link are scheduled by the network and are completely controlled by the network. The main indicator that can reflect a QoS of a 5G system is 5QI/PQI. According to a mapping relationship table, each SQI/PQI is associated with a different priority, PDB or Packet Error Rate (PER), etc.

In the U2N scenario, for a radio bearer, to meet the QoS requirement of the radio bearer, especially the PDB, the network needs to consider the Uu link status and the PC5 link status to meet the end-to-end QoS requirement of the radio bearer by reasonably configure a Uu link configuration and a PC5 link configuration. It is necessary for the network to consider how to meet the end-to-end QoS requirement through configuration.

In the U2U scenario, the source remote UE communicates with the target remote UE through the relay UE, and the end-to-end quality of service (QoS) requirement of the radio bearer between the source remote UE and the target remote UE need to be guaranteed on two PC5 links. The first PC5 link is a PC5 link between the source remote UE and the relay UE, and the second PC5 link is a PC5 link between the relay UE and the target remote UE. For the PDB, it is necessary to ensure that a sum of PDBs allocated to the two PC5 links is less than or equal to the end-to-end PDB requirement of the SL-DRB. In actual deployment, the source remote UE, the relay UE and the target remote UE are likely to belong to different networks, in which case there is no central network node that can know the link status of the two PC5 links, so how to perform QoS allocation on the two PC5 links to meet the end-to-end QoS requirement in the U2U scenario is an urgent problem to be solved.

To this end, the embodiments of the present disclosure provide a QoS allocation method and a communication apparatus, to solve the problem of how to perform QoS allocation on the two PC5 links to meet the end-to-end QoS requirement in the U2U scenario, so that the QoS requirement of the radio bearer can be ensured.

In order to better understand the QoS allocation method disclosed in the embodiments of the disclosure, a communication system to which the embodiments of the disclosure are applicable is described first.

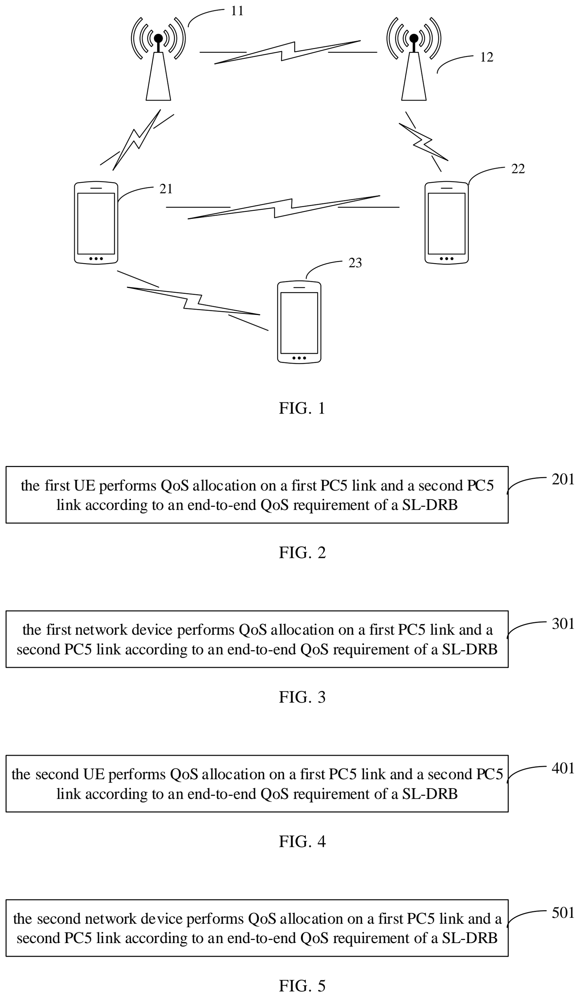

As illustrated in FIG. 1, FIG. 1 is a schematic diagram of a communication system provided by an embodiment of the disclosure. The communication system includes, but is not limited to, three UEs and two network devices, and the UEs are connected via SL. The number and form of devices shown in FIG. 1 are for example only and do not constitute a limitation on the embodiments of the disclosure. In actual applications, three or more UEs and two or more network devices may be included. The communication system shown in FIG. 1 includes two network devices 11 and 12, and three UEs 21, 22 and 23. The UE 21, the UE 22 and the UE 23 are connected via SL. For example, the UE 21 communicates with the UE 22 via a PC5 unicast link, the UE 21 communicates with the UE 23 via a PC5 unicast link, and an end-to-end connection between the UE 22 and the UE 23 is established through the UE 21. The network device 11 is a network device serving the UE 21, and the network device 12 is a network device serving the UE 22. The UE 21 may act as a relay UE in the U2U scenario, the UE 22 may act as a source remote UE in the U2U scenario, and the UE 23 may act as a target remote UE in the U2U scenario. Or, the UE 21 may act as a relay UE in the U2U scenario, the UE 22 may act as a target remote UE in the U2U scenario, and the UE 23 may act as a source remote UE in the U2U scenario.

It is noted that the technical solution of the embodiments of the disclosure can be applied to various communication systems, such as, a Long Term Evolution (LTE) system, a 5th Generation (5G) mobile communication system, a 5G New Radio (NR) system or other future new mobile communication systems. It should also be noted that SL in the embodiments of the disclosure may also be referred to as a direct link or a device-to-device link.

The network device in the embodiments of the disclosure is an entity on a network side for transmitting or receiving signals. For example, the network device may be an evolved NodeB (eNB), a transmission reception point (TRP), a next generation NodeB (gNB) in a NR system, a base station in other future mobile communication systems or an access node in a wireless networking (Wi-Fi^{™}) system. The specific technology and specific device form adopted by the network device are not limited in the embodiments of the disclosure. The network device provided by the embodiments of the disclosure may be composed of a central unit (CU) and a distributed unit (DU). The CU may also be called control unit. Adopting the CU-DU structure can split the protocol layer of the network device, such as a base station, and part of the protocol layer functions are placed in the CU for centralized control, and some or all of the remaining protocol layer functions are distributed in the DU, and the DU is centrally controlled by the CU.

The UE in the embodiments of the disclosure is an entity on a user side for receiving or transmitting signals, such as a cellular phone. The UE may also be referred to as terminal, user equipment (UE), mobile station (MS), mobile terminal (MT), and the like. The UE may be a car with communication functions, a smart car, a mobile phone, a wearable devices, a Pad, a computer with wireless transceiver functions, a virtual reality (VR) UE, an augmented reality (AR) UE, a wireless UE in industrial control, a wireless UE in self-driving, a wireless UE in remote medical surgery, a wireless UE in smart grid, a wireless UE in transportation safety, a wireless UE in smart city, a wireless UE in smart home, etc. The specific technology and specific device form adopted by the UE are not limited in the embodiments of the disclosure.

It is understandable that the communication system described in the embodiments of the disclosure is intended to clearly illustrate the technical solution according to the embodiments of the disclosure, and does not constitute a limitation on the technical solution provided by the embodiments of the disclosure. It is understandable by those skilled in the art that as system architectures evolve and new business scenarios emerge, the technical solution according to the embodiments of the disclosure are also applicable to similar technical problems.

A QoS allocation method and a communication apparatus provided in the disclosure are described in detail below in combination with the accompanying drawings.

As illustrated in FIG. 2, FIG. 2 is a flowchart of a QoS allocation method provided by an embodiment of the disclosure. It should be noted that the method is performed by a first UE. As an example, the first UE may be a transmitting UE. As illustrated in FIG. 2, the method includes, but is not limited to, the following step.

At step 201, the first UE performs QoS allocation on a first PC5 link and a second PC5 link according to an end-to-end QoS requirement of a SL-DRB.

In an embodiment of the disclosure, the first PC5 link is a PC5 unicast link between the first UE and a second UE, the second PC5 link is a PC5 unicast link between the second UE and a third UE, and an end-to-end connection between the first UE and the third UE is established through the second UE. The end-to-end QoS requirement may be an end-to-end QoS requirement of a SL-DRB between the first UE and the third UE.

In an implementation, the first UE may be a transmitting UE, the third UE may be a receiving UE, and the second UE may be a relay UE in a U2U scenario. The transmitting UE may be a source remote UE or a target remote UE in the U2U scenario. For example, if the direction of the radio bearer is from the source remote UE to the target remote UE, the transmitting UE is the source remote UE in the U2U scenario, and the receiving UE is the target remote UE in the U2U scenario. For another example, if the direction of the radio bearer is from the target remote UE to the source remote UE, the transmitting UE is the target remote UE in the U2U scenario, and the receiving UE is the source remote UE in the U2U scenario.

In an embodiment of the disclosure, the first UE may perform QoS allocation on the first PC5 link and the second PC5 link according to the end-to-end QoS requirement of the SL-DRB to meet the end-to-end QoS requirement of the SL-DRB. As an example, the first UE may perform QoS allocation on the first PC5 link and the second PC5 link according to the end-to-end QoS requirement of the SL-DRB in combination with a link status of the first PC5 link (such as a SL measurement report and/or a CBR measurement report between the first UE and the second UE) and a link status of the second PC5 link (such as a SL measurement report and/or a CBR measurement report between the second UE and the third UE), to meet the end-to-end QoS requirement of the SL-DRB.

In a possible implementation, the first UE may determine an end-to-end PDB requirement of the SL-DRB according to the end-to-end QoS requirement of the SL-DRB, and perform PDB allocation on the first PC5 link and the second PC5 link according to the end-to-end PDB requirement of the SL-DRB, to ensure that the sum of the PDB allocated to the first PC5 link and the PDB allocated to the second PC5 link is less than or equal to the end-to-end PDB requirement of the SL-DRB. As an example, assuming that the end-to-end PDB requirement of the SL-DRB is X, according to the link status of the first PC5 link (such as the SL measurement report and/or the CBR measurement report between the first UE and the second UE) and the link status of the second PC5 link (such as the SL measurement report and/or the CBR measurement report between the second UE and the third UE), the PDB allocated to the first PC5 link is L and the PDB allocated to the second PC5 link is M, L+M≤X. That is, the sum of the PDB allocated to the first PC5 link and the PDB allocated to the second PC5 link is less than or equal to the end-to-end PDB requirement of the SL-DRB.

In a possible implementation, the first UE may generate first configuration information of the SL-DRB on the first PC5 link and second configuration information of the SL-DRB on the second PC5 link according to the end-to-end QoS requirement of the SL-DRB. In this embodiment, the first configuration information and the second configuration information both include, but are not limited to, at least one of: SRAP configuration information, RLC configuration information, MAC configuration information or PHY layer configuration information.

In an embodiment of the disclosure, the first UE is responsible for generating the configurations of the SL-DRB on the two PC5 links (namely the first PC5 link and the second PC5 link). The configuration includes at least one of: a SRAP configuration, a RLC configuration, a MAC configuration or a PHY layer configuration. As an example, the configuration may include the SRAP configuration, the RLC configuration, the MAC configuration and the PHY layer configuration.

In some embodiments of the disclosure, the first configuration information is sent by the first UE to the second UE, and the second configuration information is sent by the first UE to the second UE. In an embodiment of the disclosure, the second configuration information is sent by the second UE to the third UE. In detail, the second UE receives the second configuration information sent by the first UE and then sends the second configuration information to the third UE. In an embodiment of the disclosure, the second configuration information is sent by the first UE to the third UE through the second UE. In detail, the second configuration information is sent by the first UE to the third UE through the second UE. It should be noted that, in this embodiment, the first UE may be restricted to being in an RRC IDLE (idle state)/INACTIVE (inactive state) state or OOC (out of coverage) state, or the first UE may be restricted to operating in the mode 2 (the resource allocation mode 2). This embodiment may impose no restrictions on the state of the first UE, meaning that the scheme is applicable regardless of the RRC state of the first UE or the mode in which it is operating.

As an example, the first UE sends the first configuration information to the second UE via a PC5 RRC signaling, which may be RRCReconfigurationSidelink signaling. A source address of a packet to which the PC5 RRC signaling belongs is a source layer 2 address of the first UE, and a target address of the packet to which the PC5 RRC signaling belongs is a source layer 2 address of the second UE.

As an example, the first UE sends the second configuration information to the second UE via a PC5 RRC signaling, which may be RRCReconfigurationSidelink signaling. A source address of a packet to which the PC5 RRC signaling belongs is a source layer 2 address of the first UE, and a target address of the packet to which the PC5 RRC signaling belongs is a source layer 2 address of the second UE.

As an example, the second UE receives the second configuration information sent by the first UE, and then sends the second configuration information received from the first UE to the third UE through a PC5 RRC signaling, which may be RRCReconfigurationSidelink signaling. A source address of a packet to which the PC5 RRC signaling belongs is a source layer 2 address of the second UE, and a target address of the packet to which the PC5 RRC signaling belongs is a source layer 2 address of the third UE.

As an example, the second configuration information is sent from the first UE to the third UE via the second UE. The first UE sends the second configuration information to the third UE through the second UE through a PC5 RRC signaling, which may be RRCReconfigurationSidelink signaling. A source address of a packet to which the PC5 RRC signaling belongs is a source layer 2 address of the first UE, and a target address of the packet to which the PC5 RRC signaling belongs is a source layer 2 address of the third UE.

In some embodiments of the disclosure, the first UE may obtain SL-SDAP configuration information and SL-PDCP configuration information associated with the SL-DRB, and sends the SL-SDAP configuration information and the SL-PDCP configuration information to the third UE through the second UE.

As an example, the first UE in an RRC connected state may obtain the SL-SDAP configuration information and SL-PDCP configuration information associated with the SL-DRB from the network device through a dedicated signaling. The first UE in an RRC IDLE/INACTIVE state may obtain the SL-SDAP configuration information and the SL-PDCP configuration information associated with the SL-DRB through a system information block (SIB). The first UE is OOC may obtain the SL-SDAP configuration information and the SL-PDCP configuration information associated with the SL-DRB through pre-configuration.

In the disclosure, by the transmitting UE to perform QoS allocation on the first PC5 link and the second PC5 link to meet the end-to-end QoS requirement of the SL-DRB, the problem of how to perform QoS allocation on the two PC5 links to meet the end-to-end QoS requirement in the U2U scenario can be solved, so that the end-to-end QoS requirement of the radio bearer can be ensured.

As illustrated in FIG. 3, FIG. 3 is a flowchart of another QoS allocation method provided by an embodiment of the disclosure. It should be noted that the method is performed by a first network device. As an example, the first network device may be a network device serving a first UE, and the first UE may be a transmitting UE. As illustrated in FIG. 3, the method includes, but is not limited to, the following step.

At step 301, the first network device performs QoS allocation on a first PC5 link and a second PC5 link according to an end-to-end QoS requirement of a SL-DRB.

In an embodiment of the disclosure, the first PC5 link is a PC5 unicast link between the first UE and a second UE, the second PC5 link is a PC5 unicast link between the second UE and a third UE, and an end-to-end connection between the first UE and the third UE is established through the second UE. The end-to-end QoS requirement may be an end-to-end QoS requirement of a SL-DRB between the first UE and the third UE.

In an implementation, the first UE may be a transmitting UE, the third UE may be a receiving UE, and the second UE may be a relay UE in a U2U scenario. The transmitting UE may be a source remote UE or a target remote UE in the U2U scenario. For example, if the direction of the radio bearer is from the source remote UE to the target remote UE, the transmitting UE is the source remote UE in the U2U scenario, and the receiving UE is the target remote UE in the U2U scenario. For another example, if the direction of the radio bearer is from the target remote UE to the source remote UE, the transmitting UE is the target remote UE in the U2U scenario, and the receiving UE is the source remote UE in the U2U scenario.

In this embodiment, the first network device may perform QoS allocation on the first PC5 link and the second PC5 link according to the end-to-end QoS requirement of the SL-DRB to meet the end-to-end QoS requirement of the SL-DRB. As an example, the first network device may obtain a link status of the first PC5 link (such as a SL measurement report and/or a CBR measurement report between the first UE and the second UE) and a link status of the second PC5 link (such as a SL measurement report and/or a CBR measurement report between the second UE and the third UE), and perform QoS allocation on the first PC5 link and the second PC5 link according to the end-to-end QoS requirement of the SL-DRB in combination with the link status of the first PC5 link and the link status of the second PC5 link, to meet the end-to-end QoS requirement of the SL-DRB.

In a possible implementation, the first network device may determine an end-to-end PDB requirement of the SL-DRB according to the end-to-end QoS requirement of the SL-DRB, and perform PDB allocation on the first PC5 link and the second PC5 link according to the end-to-end PDB requirement of the SL-DRB, to ensure that the sum of the PDB allocated to the first PC5 link and the PDB allocated to the second PC5 link is less than or equal to the end-to-end PDB requirement of the SL-DRB. As an example, assuming that the end-to-end PDB requirement of the SL-DRB is X, according to the link status of the first PC5 link (such as the SL measurement report and/or the CBR measurement report between the first UE and the second UE) and the link status of the second PC5 link (such as the SL measurement report and/or the CBR measurement report between the second UE and the third UE), the PDB allocated to the first PC5 link is L and the PDB allocated to the second PC5 link is M, L+M≤X. That is, the sum of the PDB allocated to the first PC5 link and the PDB allocated to the second PC5 link is less than or equal to the end-to-end PDB requirement of the SL-DRB.

In a possible implementation, the first network device may generate first configuration information of the SL-DRB on the first PC5 link and second configuration information of the SL-DRB on the second PC5 link according to the end-to-end QoS requirement of the SL-DRB. In this embodiment, the first configuration information and the second configuration information both include, but are not limited to, at least one of: SRAP configuration information, RLC configuration information, MAC configuration information or PHY layer configuration information.

In an embodiment of the disclosure, the first network device is responsible for generating the configurations of the SL-DRB on the two PC5 links (namely the first PC5 link and the second PC5 link). The configuration includes at least one of: a SRAP configuration, a RLC configuration, a MAC configuration or a PHY layer configuration. As an example, the configuration may include the SRAP configuration, the RLC configuration, the MAC configuration and the PHY layer configuration.

In some embodiments of the disclosure, the first network device may send the first configuration information and the second configuration information to the first UE. The first configuration information is sent by the first UE to the second UE, and the second configuration information is sent by the first UE to the second UE. In an embodiment of the disclosure, the second configuration information is sent by the second UE to the third UE. In detail, the second UE receives the second configuration information sent by the first UE and then sends the second configuration information to the third UE. In an embodiment of the disclosure, the second configuration information is sent by the first UE to the third UE through the second UE. In detail, the second configuration information is sent directly by the first UE to the third UE through the second UE.

As an example, the first network device sends the first configuration information to the first UE, and then the first UE sends the first configuration information received from the first network device to the second UE through a PC5 RRC signaling, which may be RRCReconfigurationSidelink signaling. A source address of a packet to which the PC5 RRC signaling belongs is a source layer 2 address of the first UE, and a target address of the packet to which the PC5 RRC signaling belongs is a source layer 2 address of the second UE. In this embodiment, the first UE can only be in an RRC connected state.

As an example, the first network device sends the second configuration information to the first UE, and then the first UE sends the second configuration information received from the first network device to the second UE through a PC5 RRC signaling, which may be RRCReconfigurationSidelink signaling. A source address of a packet to which the PC5 RRC signaling belongs is a source layer 2 address of the first UE, and a target address of the packet to which the PC5 RRC signaling belongs is a source layer 2 address of the second UE. In this embodiment, the first UE can only be in an RRC connected state.

As an example, the second UE receives the second configuration information sent by the first UE, and then sends the second configuration information received from the first UE to the third UE through a PC5 RRC signaling, which may be RRCReconfigurationSidelink signaling. A source address of a packet to which the PC5 RRC signaling belongs is a source layer 2 address of the second UE, and a target address of the packet to which the PC5 RRC signaling belongs is a source layer 2 address of the third UE. In this embodiment, the first UE can only be in an RRC connected state.

As an example, the second configuration information is directly sent by the first UE to the third UE through the second UE. The first UE sends the second configuration information to the third UE through the second UE through a PC5 RRC signaling, which may be RRCReconfigurationSidelink signaling. A source address of a packet to which the PC5 RRC signaling belongs is a source layer 2 address of the first UE, and a target address of the packet to which the PC5 RRC signaling belongs is a source layer 2 address of the third UE. In this embodiment, the first UE can only be in an RRC connected state.

In the disclosure, the problem of how to perform QoS allocation on the two PC5 links to ensure the end-to-end QoS requirement in the U2U scenario can be solved by the serving network device of the transmitting UE performs QoS allocation on the first PC5 link and the second PC5 link to meet the end-to-end QoS requirement of the SL-DRB, so that the end-to-end QoS requirement of the radio bearer can be ensured.

As illustrated in FIG. 4, FIG. 4 is a flowchart of another QoS allocation method provided by an embodiment of the disclosure. It should be noted that the method is performed by a second UE. As an example, the second UE may be a relay UE in a U2U scenario. As illustrated in FIG. 4, the method includes, but is not limited to, the following step.

At step 401, the second UE performs QoS allocation on a first PC5 link and a second PC5 link according to an end-to-end QoS requirement of a SL-DRB.

In an embodiment of the disclosure, the first PC5 link is a PC5 unicast link between the first UE and a second UE, the second PC5 link is a PC5 unicast link between the second UE and a third UE, and an end-to-end connection between the first UE and the third UE is established through the second UE. The end-to-end QoS requirement may be an end-to-end QoS requirement of a SL-DRB between the first UE and the third UE.

In an implementation, the first UE may be a transmitting UE, the third UE may be a receiving UE, and the second UE may be a relay UE in a U2U scenario. The transmitting UE may be a source remote UE or a target remote UE in the U2U scenario. For example, if the direction of the radio bearer is from the source remote UE to the target remote UE, the transmitting UE is the source remote UE in the U2U scenario, and the receiving UE is the target remote UE in the U2U scenario. For another example, if the direction of the radio bearer is from the target remote UE to the source remote UE, the transmitting UE is the target remote UE in the U2U scenario, and the receiving UE is the source remote UE in the U2U scenario.

In this embodiment, the second UE may perform QoS allocation on the first PC5 link and the second PC5 link according to the end-to-end QoS requirement of the SL-DRB to meet the end-to-end QoS requirement of the SL-DRB. As an example, the second UE may perform QoS allocation on the first PC5 link and the second PC5 link according to the end-to-end QoS requirement of the SL-DRB in combination with a link status of the first PC5 link (such as a SL measurement report and/or a CBR measurement report between the first UE and the second UE) and a link status of the second PC5 link (such as a SL measurement report and/or a CBR measurement report between the second UE and the third UE), to meet the end-to-end QoS requirement of the SL-DRB.

In a possible implementation, the second UE may determine an end-to-end PDB requirement of the SL-DRB according to the end-to-end QoS requirement of the SL-DRB, and perform PDB allocation on the first PC5 link and the second PC5 link according to the end-to-end PDB requirement of the SL-DRB, to ensure that the sum of the PDB allocated to the first PC5 link and the PDB allocated to the second PC5 link is less than or equal to the end-to-end PDB requirement of the SL-DRB. As an example, assuming that the end-to-end PDB requirement of the SL-DRB is X, according to the link status of the first PC5 link (such as the SL measurement report and/or the CBR measurement report between the first UE and the second UE) and the link status of the second PC5 link (such as the SL measurement report and/or the CBR measurement report between the second UE and the third UE), the PDB allocated to the first PC5 link is L and the PDB allocated to the second PC5 link is M, L+M≤X. That is, the sum of the PDB allocated to the first PC5 link and the PDB allocated to the second PC5 link is less than or equal to the end-to-end PDB requirement of the SL-DRB.

In a possible implementation, the second UE may generate first configuration information of the SL-DRB on the first PC5 link and second configuration information of the SL-DRB on the second PC5 link according to the end-to-end QoS requirement of the SL-DRB. In this embodiment, the first configuration information and the second configuration information both include, but are not limited to, at least one of: SRAP configuration information, RLC configuration information, MAC configuration information or PHY layer configuration information.

In an embodiment of the disclosure, the second UE is responsible for generating the configurations of the SL-DRB on the two PC5 links (namely the first PC5 link and the second PC5 link). The configuration includes at least one of: a SRAP configuration, a RLC configuration, a MAC configuration or a PHY layer configuration. As an example, the configuration may include the SRAP configuration, the RLC configuration, the MAC configuration and the PHY layer configuration.

In some embodiments of the disclosure, the second UE may send the first configuration information to the first UE, and send the second configuration information to the third UE.

As an example, the second UE sends the first configuration information to the first UE through a PC5 RRC signaling, which may be RRCReconfigurationSidelink signaling. A source address of a packet to which the PC5 RRC signaling belongs is a source layer 2 address of the second UE, and a target address of the packet to which the PC5 RRC signaling belongs is a source layer 2 address of the first UE.

As an example, the second UE sends the second configuration information to the third UE through a PC5 RRC signaling, which may be RRCReconfigurationSidelink signaling. A source address of a packet to which the PC5 RRC signaling belongs is a source layer 2 address of the second UE, and a target address of the packet to which the PC5 RRC signaling belongs is a source layer 2 address of the third UE.

It should be noted that, in this embodiment, the second UE may be restricted to be in an RRC IDLE/INACTIVE state or OOC state, or the first UE may be restricted to be operating in the mode 2. In an embodiment of the disclosure, this embodiment may impose no restrictions on the state of the second UE, meaning that the scheme is applicable regardless of the RRC state of the second UE or the mode in which the second UE in which it is operating.

In the disclosure, by the relay UE to performs QoS allocation on the first PC5 link and the second PC5 link to meet the end-to-end QoS requirement of the SL-DRB, the problem of how to perform QoS allocation on the two PC5 links to meet the end-to-end QoS requirement in the U2U scenario can be solved, so that the end-to-end QoS requirement of the radio bearer can be ensured.

As illustrated in FIG. 5, FIG. 5 is a flowchart of another QoS allocation method provided by an embodiment of the disclosure. It should be noted that the method is performed by a second network device. As an example, the second network device may be a network device serving a second UE, and the second UE may be a relay UE in a U2U scenario. As illustrated in FIG. 5, the method includes, but is not limited to, the following step.

At step 501, the second network device performs QoS allocation on a first PC5 link and a second PC5 link according to an end-to-end QoS requirement of a SL-DRB.

In an embodiment of the disclosure, the first PC5 link is a PC5 unicast link between the first UE and a second UE, the second PC5 link is a PC5 unicast link between the second UE and a third UE, and an end-to-end connection between the first UE and the third UE is established through the second UE. The end-to-end QoS requirement may be an end-to-end QoS requirement of a SL-DRB between the first UE and the third UE.

In an implementation, the first UE may be a transmitting UE, the third UE may be a receiving UE, and the second UE may be a relay UE in a U2U scenario. The transmitting UE may be a source remote UE or a target remote UE in the U2U scenario. For example, if the direction of the radio bearer is from the source remote UE to the target remote UE, the transmitting UE is the source remote UE in the U2U scenario, and the receiving UE is the target remote UE in the U2U scenario. For another example, if the direction of the radio bearer is from the target remote UE to the source remote UE, the transmitting UE is the target remote UE in the U2U scenario, and the receiving UE is the source remote UE in the U2U scenario.

In this embodiment, the second network device may perform QoS allocation on the first PC5 link and the second PC5 link according to the end-to-end QoS requirement of the SL-DRB to meet the end-to-end QoS requirement of the SL-DRB. As an example, the second network device may obtain a link status of the first PC5 link (such as a SL measurement report and/or a CBR measurement report between the first UE and the second UE) and a link status of the second PC5 link (such as a SL measurement report and/or a CBR measurement report between the second UE and the third UE), and perform QoS allocation on the first PC5 link and the second PC5 link according to the end-to-end QoS requirement of the SL-DRB in combination with the link status of the first PC5 link and the link status of the second PC5 link, to meet the end-to-end QoS requirement of the SL-DRB.

In a possible implementation, the second network device may determine an end-to-end PDB requirement of the SL-DRB according to the end-to-end QoS requirement of the SL-DRB, and perform PDB allocation on the first PC5 link and the second PC5 link according to the end-to-end PDB requirement of the SL-DRB, to ensure that the sum of the PDB allocated to the first PC5 link and the PDB allocated to the second PC5 link is less than or equal to the end-to-end PDB requirement of the SL-DRB. As an example, assuming that the end-to-end PDB requirement of the SL-DRB is X, according to the status of the first PC5 link (obtained from the SL measurement report and/or the CBR measurement report between the first UE and the second UE) and the status of the second PC5 link (obtained from the SL measurement report and/or the CBR measurement report between the second UE and the third UE), the PDB allocated to the first PC5 link is L and the PDB allocated to the second PC5 link is M, L+M≤X. That is, the sum of the PDB allocated to the first PC5 link and the PDB allocated to the second PC5 link is less than or equal to the end-to-end PDB requirement of the SL-DRB.

In a possible implementation, the second network device may generate first configuration information of the SL-DRB on the first PC5 link and second configuration information of the SL-DRB on the second PC5 link according to the end-to-end QoS requirement of the SL-DRB. In this embodiment, the first configuration information and the second configuration information both include, but are not limited to, at least one of: SRAP configuration information, RLC configuration information, MAC configuration information or PHY layer configuration information.

In an embodiment of the disclosure, the second network device is responsible for generating the configurations of the SL-DRB on the two PC5 links (namely the first PC5 link and the second PC5 link). The configuration includes at least one of: a SRAP configuration, a RLC configuration, a MAC configuration or a PHY layer configuration. As an example, the configuration may include the SRAP configuration, the RLC configuration, the MAC configuration and the PHY layer configuration.

In some embodiments of the disclosure, the second network device sends the first configuration information and the second configuration information to the second UE. The first configuration information is sent by the second UE to the first UE, and the second configuration information is sent by the second UE to the third UE.

As an example, the second network device sends the first configuration information to the second UE, and then the second UE sends the first configuration information received from the second network device to the first UE through a PC5 RRC signaling, which may be RRCReconfigurationSidelink signaling. A source address of a packet to which the PC5 RRC signaling belongs is a source layer 2 address of the second UE, and a target address of the packet to which the PC5 RRC signaling belongs is a source layer 2 address of the first UE. In this embodiment, the second UE can only be in an RRC connected state.

As an example, the second network device sends the second configuration information to the second UE, and then the second UE sends the second configuration information received from the second network device to the third UE through a PC5 RRC signaling, which may be RRCReconfigurationSidelink signaling. A source address of a packet to which the PC5 RRC signaling belongs is a source layer 2 address of the second UE, and a target address of the packet to which the PC5 RRC signaling belongs is a source layer 2 address of the third UE. In this embodiment, the second UE can only be in an RRC connected state.

In the disclosure, the problem of how to perform QoS allocation on the two PC5 links to ensure the end-to-end QoS requirement in the U2U scenario can be solved by the serving network device of the relay UE performs QoS allocation on the first PC5 link and the second PC5 link to meet the end-to-end QoS requirement of the SL-DRB, so that the end-to-end QoS requirement of the radio bearer can be ensured.

In the above-mentioned embodiments of the disclosure, the methods provided by the embodiments of the disclosure are introduced from the perspectives of the UE and the network equipment, respectively. In order to implement the functions in the methods provided by the above embodiments of the disclosure, the UE may include a hardware structure and/or a software module, and implement the above-mentioned functions in the form of a hardware structure, a software module, or the hardware structure and the software module. Any of the above functions may be implemented in the form of a hardware structure, a software module, or the hardware structure and the software module.

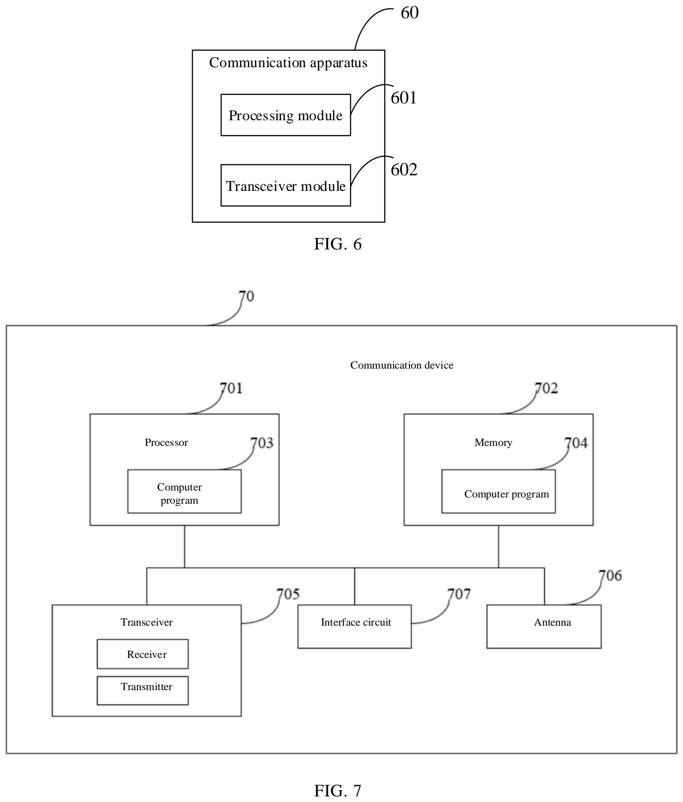

FIG. 6 is a structural schematic diagram of a communication apparatus 60 provided by an embodiment of the disclosure. The communication apparatus 60 in FIG. 6 includes: a processing module 601 and a transceiver module 602. The transceiver module 602 include: a sending module and/or a receiving module. The sending module is configured to implement a sending function, and the receiving module is configured to implement a receiving function. The transceiver module 602 can realize the sending function and/or the receiving function.

The communication apparatus 60 may be a UE, a device in the UE, or a device that can be used in combination with the UE. Or, the communication apparatus 60 may be a network device, a device in the network device, or a device that can be used in combination with the network device.

In a case that the communication apparatus 60 is a UE (e.g., the first UE described in the embodiment of FIG. 2 above), the processing module 601 is configured to: perform QoS allocation on a first PC5 link and a second PC5 link according to an end-to-end QoS requirement of a SL-DRB, in which the first PC5 link is a PC5 unicast link between the first UE and a second UE, the second PC5 link is a PC5 unicast link between the second UE and a third UE, and an end-to-end connection between the first UE and the third UE is established through the second UE.

In an implementation, the processing module 601 is configured to: determine an end-to-end PDB requirement of the SL-DRB according to the end-to-end QoS requirement of the SL-DRB; and perform PDB allocation on the first PC5 link and the second PC5 link according to the end-to-end PDB requirement of the SL-DRB, in which a sum of a PDB allocated to the first PC5 link and a PDB allocated to the second PC5 link is less than or equal to the end-to-end PDB requirement of the SL-DRB.

In an implementation, the processing module 601 is configured to: generate first configuration information of the SL-DRB on the first PC5 link and second configuration information of the SL-DRB on the second PC5 link according to the end-to-end QoS requirement of the SL-DRB; in which the first configuration information and the second configuration information both include at least one of: SRAP configuration information, RLC configuration information, MAC configuration information or PHY layer configuration information.

In a possible implementation, the transceiver module 602 is configured to: send the first configuration information to the second UE; and send the second configuration information to the third UE through the second UE.

In an implementation, the processing module 601 is configured to: obtain SL-SDAP configuration information and SL-PDCP configuration information associated with the SL-DRB. The transceiver module 602 is configured to: send the SL-SDAP configuration information and the SL-PDCP configuration information to the third UE through the second UE.

In a possible implementation, the processing module 601 is configured to: obtain the SL-SDAP configuration information and the SL-PDCP configuration information associated with the SL-DRB from a network device; or obtain the SL-SDAP configuration information and the SL-PDCP configuration information associated with the SL-DRB through pre-configuration.

In a case that the communication apparatus 60 is a network device (e.g., the first network device described in the embodiment of FIG. 3 above), the processing module 601 is configured to: perform QoS allocation on a first PC5 link and a second PC5 link according to an end-to-end QoS requirement of a SL-DRB, in which the first PC5 link is a PC5 unicast link between a first UE and a second UE, the second PC5 link is a PC5 unicast link between the second UE and a third UE, and an end-to-end connection between the first UE and the third UE is established through the second UE.

In an implementation, the processing module 601 is configured to: determine an end-to-end PDB requirement of the SL-DRB according to the end-to-end QoS requirement of the SL-DRB; and perform PDB allocation on the first PC5 link and the second PC5 link according to the end-to-end PDB requirement of the SL-DRB, in which a sum of a PDB allocated to the first PC5 link and a PDB allocated to the second PC5 link is less than or equal to the end-to-end PDB requirement of the SL-DRB.

In an implementation, the processing module 601 is configured to: generate first configuration information of the SL-DRB on the first PC5 link and second configuration information of the SL-DRB on the second PC5 link according to the end-to-end QoS requirement of the SL-DRB; in which the first configuration information and the second configuration information both include at least one of: SRAP configuration information, RLC configuration information, MAC configuration information or PHY layer configuration information.

In a possible implementation, the transceiver module 602 is configured to: send the first configuration information and the second configuration information to the first UE, in which the first configuration information is sent by the UE to the second UE, and the second configuration information is sent by the first UE to the third UE through the second UE.

In a case that the communication apparatus 60 is a UE (e.g., the second UE described in the embodiment of FIG. 4 above), the processing module 601 is configured to: perform QoS allocation on a first PC5 link and a second PC5 link according to an end-to-end QoS requirement of a SL-DRB, in which the first PC5 link is a PC5 unicast link between a first UE and the second UE, the second PC5 link is a PC5 unicast link between the second UE and a third UE, and an end-to-end connection between the first UE and the third UE is established through the second UE.

In an implementation, the processing module 601 is configured to: determine an end-to-end PDB requirement of the SL-DRB according to the end-to-end QoS requirement of the SL-DRB; and perform PDB allocation on the first PC5 link and the second PC5 link according to the end-to-end PDB requirement of the SL-DRB, in which a sum of a PDB allocated to the first PC5 link and a PDB allocated to the second PC5 link is less than or equal to the end-to-end PDB requirement of the SL-DRB.

In an implementation, the processing module 601 is configured to: generate first configuration information of the SL-DRB on the first PC5 link and second configuration information of the SL-DRB on the second PC5 link according to the end-to-end QoS requirement of the SL-DRB; in which the first configuration information and the second configuration information both include at least one of: SRAP configuration information, RLC configuration information, MAC configuration information or PHY layer configuration information.

In a possible implementation, the transceiver module 602 is configured to: send the first configuration information to the first UE; and send the second configuration information to the third UE.

In a case that the communication apparatus 60 is a network device (e.g., the second network device described in the embodiment of FIG. 5 above), the processing module 601 is configured to: perform QoS allocation on a first PC5 link and a second PC5 link according to an end-to-end QoS requirement of a SL-DRB, in which the first PC5 link is a PC5 unicast link between a first UE and a second UE, the second PC5 link is a PC5 unicast link between the second UE and a third UE, and an end-to-end connection between the first UE and the third UE is established through the second UE.

In an implementation, the processing module 601 is configured to: determine an end-to-end PDB requirement of the SL-DRB according to the end-to-end QoS requirement of the SL-DRB; and perform PDB allocation on the first PC5 link and the second PC5 link according to the end-to-end PDB requirement of the SL-DRB, in which a sum of a PDB allocated to the first PC5 link and a PDB allocated to the second PC5 link is less than or equal to the end-to-end PDB requirement of the SL-DRB.

In an implementation, the processing module 601 is configured to: generate first configuration information of the SL-DRB on the first PC5 link and second configuration information of the SL-DRB on the second PC5 link according to the end-to-end QoS requirement of the SL-DRB; in which the first configuration information and the second configuration information both include at least one of: SRAP configuration information, RLC configuration information, MAC configuration information or PHY layer configuration information.

In a possible implementation, the transceiver module 602 is configured to: send the first configuration information and the second configuration information to the second UE; in which the first configuration information is sent by the second UE to the first UE, and the second configuration information is sent by the second UE to the third UE.

With regard to the apparatus in the above embodiments, the specific way in which each module performs an operation has been described in detail in the method embodiments, and will not be described in detail here.

FIG. 7 is a schematic diagram of a communication device 70 provided by an embodiment of the disclosure. The communication device 70 may be a UE, or a network device, or a chip, a chip system or a processor that supports the UE to realize the above-described methods, or a chip, a chip system or a processor that supports the network device to realize the above-described methods. The device is used to realize the methods described in the above method embodiments with reference to the descriptions of the above-described method embodiments.

The communication device 70 may include one or more processors 701. The processor 701 may be a general purpose processor or a dedicated processor, such as, a baseband processor or a central processor. The baseband processor is used for processing communication protocols and communication data. The central processor is used for controlling the communication device (e.g., base station, baseband chip, UE, UE chip, CU or DU), executing computer programs, and processing data of the computer programs.

In an embodiment of the disclosure, the communication device 70 may further include one or more memories 702 on which a computer program 704 may be stored. When the processor 701 executes the computer program 704, the communication device 70 is caused to perform the methods described in the above method embodiments. In an embodiment of the disclosure, the memory 702 may also store data. The communication device 70 and the memory 702 may be provided separately or may be integrated together.

In an embodiment of the disclosure, the communication device 70 may also include a transceiver 705 and an antenna 706. The transceiver 705 may be referred to as transceiver unit, transceiver machine or transceiver circuit, for realizing a transceiver function. The transceiver 705 may include a receiver and a transmitter. The receiver may be referred to as receiver machine or receiving circuit, for realizing a receiving function. The transmitter may be referred to as transmitter machine or transmitting circuit, for realizing a transmitting function.

In an embodiment of the disclosure, the communication device 70 may also include one or more interface circuits 707. The interface circuits 707 are used to receive code instructions and transmit them to the processor 701. The processor 701 runs the code instructions to cause the communication device 70 to perform the methods described in the method embodiments.

In an implementation, the processor 701 may include a transceiver for implementing the receiving and transmitting functions. The transceiver may be, for example, a transceiver circuit, an interface or an interface circuit. The transceiver circuit, interface or interface circuit for implementing the receiving and transmitting functions may be separated or may be integrated together. The transceiver circuit, interface or interface circuit described above may be used for code/data reading and writing, or may be used for signal transmission or delivery.

In an implementation, the processor 701 may store a computer program 703. When the computer program 703 is executed by the processor 701, the communication device 70 is caused to perform the methods described in the method embodiments above. The computer program 703 may be solidified in the processor 701, in which case the processor 701 may be implemented by hardware.

In an implementation, the communication device 70 may include circuits. The circuits may implement the sending, receiving or communicating function in the preceding method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs) and electronic devices. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the descriptions of the above embodiments may be a UE, but the scope of the communication device described in the disclosure is not limited thereto, and the structure of the communication device is not limited by FIG. 7. The communication device may be a stand-alone device or may be part of a larger device. For example, the described communication device may be:
(1) a independent integrated circuit (IC), or a chip, or a chip system/subsystem;
(2) a set comprising one or more ICs, in an embodiment of the disclosure, the IC set may further include storage components for storing data and computer programs;
(3) an application-specific integrated circuit (ASIC), such as a modem;
(4) a module embeddable within other devices;
(5) a receiver, UE, smart UE, cellular phone, wireless device, handheld device, mobile unit, in-vehicle device, network device, cloud device, artificial intelligence device, and the like; and
(6) others.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure are implemented. The computer may be a general-purpose computer, a dedicated computer, a computer network or other programmable devices. The computer program may be stored in a computer readable storage medium or transmitted from one computer readable storage medium to another computer readable storage medium. For example, the computer program may be transmitted from one web site, computer, server or data center to another web site, computer, server or data center, in a wired manner (e.g., by using coaxial cables, fiber optics or digital subscriber lines (DSLs)) or wirelessly (e.g., by using infrared wave, wireless wave or microwave). The computer readable storage medium may be any usable medium to which the computer has access or a data storage device integrated by one or more usable mediums such as a server or a data center. The usable medium may be a magnetic medium (e.g., floppy disk, hard disk and tape), an optical medium (e.g., high-density digital video disc (DVD)), or a semiconductor medium (e.g., solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four or more, which is not limited in the disclosure. In the embodiments of the disclosure, for a type of technical features, "first", "second" and "third", and "A", "B", "C" and "D" are used to distinguish different technical features of the type, the technical features described using the "first", "second" and "third", and "A", "B", "C" and "D" do not indicate any order of precedence or magnitude.

The correspondences shown in the tables in the disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in the disclosure may not be configured. For another example, the above tables may be adjusted appropriately, such as splitting, combining, and the like. The names of the parameters shown in the titles of the above tables may be other names that can be understood by the communication device, and the values or representations of the parameters may be other values or representations that can be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in the disclosure may be understood as define, predefine, store, pre-store, pre-negotiate, pre-configure, solidify or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the preceding method embodiments, and will not be repeated herein.

The above are only specific implementations of the disclosure, but the scope of protection of the disclosure is not limited thereto. Those skilled in the art familiar to the technical field may easily think of changes or substitutions in the technical scope disclosed by the disclosure, which shall be covered by the scope of protection of the disclosure. Therefore, the scope of protection of the disclosure shall be governed by the scope of protection of the attached claims.

## Claims

1. A Quality of Service (QoS) allocation method, comprising:
performing QoS allocation on a first PC5 link and a second PC5 link according to an end-to-end QoS requirement of a Sidelink Data Radio Bearer (SL-DRB);
wherein the first PC5 link is a PC5 unicast link between a first User Equipment (UE) and a second UE, the second PC5 link is a PC5 unicast link between the second UE and a third UE, and an end-to-end connection between the first UE and the third UE is established through the second UE.

2. The method of claim 1, wherein performing QoS allocation on the first PC5 link and the second PC5 link according to the end-to-end QoS requirement of the SL-DRB comprises:
determining an end-to-end packet delay budget (PDB) requirement of the SL-DRB according to the end-to-end QoS requirement of the SL-DRB; and
performing PDB allocation on the first PC5 link and the second PC5 link according to the end-to-end PDB requirement of the SL-DRB, wherein a sum of a PDB allocated to the first PC5 link and a PDB allocated to the second PC5 link is less than or equal to the end-to-end PDB requirement of the SL-DRB.

3. The method of claim 1, wherein performing QoS allocation on the first PC5 link and the second PC5 link according to the end-to-end QoS requirement of the SL-DRB comprises:
generating first configuration information of the SL-DRB on the first PC5 link and second configuration information of the SL-DRB on the second PC5 link according to the end-to-end QoS requirement of the SL-DRB;
wherein the first configuration information and the second configuration information both comprise at least one of: Sidelink Relay Adaptation Protocol (SRAP) configuration information, Radio Link Control (RLC) configuration information, Medium Access Control (MAC) configuration information or Physical (PHY) layer configuration information.

4. The method of claim 3, wherein the method is performed by the first UE, and the method further comprises:
sending the first configuration information to the second UE; and
sending the second configuration information to the third UE through the second UE.

5. The method of claim 4, further comprising:
obtaining Sidelink Service Data Adaptation Protocol (SL-SDAP) configuration information and Sidelink Packet Data Convergence Protocol (SL-PDCP) configuration information associated with the SL-DRB; and
sending the SL-SDAP configuration information and the SL-PDCP configuration information to the third UE through the second UE.

6. The method of claim 5, wherein obtaining the SL-SDAP configuration information and the SL-PDCP configuration information associated with the SL-DRB comprises:
obtaining the SL-SDAP configuration information and the SL-PDCP configuration information associated with the SL-DRB from a network device; or
obtaining the SL-SDAP configuration information and the SL-PDCP configuration information associated with the SL-DRB through pre-configuration.

7. The method of claim 3, wherein the method is performed by a first network device, the first network device being a service network device of the first UE, and the method further comprises:
sending the first configuration information and the second configuration information to the first UE, wherein the first configuration information is sent by the first UE to the second UE, and the second configuration information is sent by the first UE to the third UE through the second UE.

8. The method of claim 3, wherein the method is performed by the second UE, and the method further comprises:
sending the first configuration information to the first UE; and
sending the second configuration information to the third UE.

9. The method of claim 3, wherein the method is performed by a second network device, the second network device being a service network device of the second UE, and the method further comprises:
sending the first configuration information and the second configuration information to the second UE, wherein the first configuration information is sent by the second UE to the first UE, and the second configuration information is sent by the second UE to the third UE.

10. A communication apparatus, comprising:
a processing module, configured to perform QoS allocation on a first PC5 link and a second PC5 link according to an end-to-end QoS requirement of a Sidelink Data Radio Bearer (SL-DRB);
wherein the first PC5 link is a PC5 unicast link between a first User Equipment (UE) and a second UE, the second PC5 link is a PC5 unicast link between the second UE and a third UE, and an end-to-end connection between the first UE and the third UE is established through the second UE.

11. A communication device, comprising: a processor and a memory, wherein the memory stores a computer program, and the processor executes the computer program stored in the memory to cause the device to execute the method according to any one of claims 1-9.

12. A computer readable storage medium for storing instructions, wherein when the instructions are executed, the method according to any one of claims 1-9 is implemented.
